# EUROPEAN PATENT APPLICATION

(11) **EP 1 947 376 A2**
(43) Date of publication of application: **23.07.2008**
(21) Application number: 07122528.8
(22) Date of filing: 06.12.2007
(51) Int. Cl.: F16L 23/028, F16L 23/16

(54) **Hermetic refrigerant fitting**

(30) Priority: 16.01.2007 US 653704
(71) Applicant: Delphi Technologies, Inc., Troy, Michigan 48007 (US)
(72) Inventor: Kumpf, William J., Lockport, NY 14094 (US); Baker, James A., Williamsville, NY 14221 (US); Kadle, Prasad S., Williamsville, NY 14221 (US)
(74) Representative: Robert, Vincent

(57) **Abstract**

A pipe coupling assembly includes two identical pipes **(20, 26)** each extending into an enlarged collar **(22, 28)** and then into a hemispherical socket **(24, 30)** each with a socket radius **(R_{S1}, R_{S2}).** A bulbous insert **(32)** engages the sockets **(24, 30)** of the pipes **(20, 26).** A clamping mechanism **(40)** is disposed about the pipes **(20, 26)** and includes two blocks **(42, 44)** for holding the sockets **(24, 30)** into engagement with the insert **(32).** The insert **(32)** has two necks **(58, 60)** both extending axially around the flow passage **(34)** and fitting into the pipes **(20, 26).** The insert **(32)** defines a slot **(62)** extending radially and circumferentially about the axis **(A)** for allowing movement of two hemispheres **(36, 38)** relative to one another. Each of the hemispheres has an insert radius **(R_{I1}, R_{I2}).** The socket radii **(R_{S1}, R_{S2})** are greater than the respective insert radii **(R_{I1}, R_{I2})** for establishing a contact line between the insert **(32)** and the sockets **(24, 30)** which becomes a contact band as the blocks **(42, 44)** move together.

## Description

### TECHNICAL FIELD

A pipe coupling assembly connects a first pipe to a second pipe.

### BACKGROUND OF THE INVENTION

Current methods for joining components of fluid handling systems, such as air conditioning systems, typically use fittings with elastomeric seals, such as o-rings or seal washers, to contain the fluid. Elastomeric seals work well in applications of moderate temperature and pressure condition and where some small amount of leakage or permeation of the refrigerant or working fluid is tolerable. The fittings themselves are often machined and brazed or welded to the pipes, adding another potential leak location. Some fittings form the pipe itself to create the surface on which the seal is located.

In applications where temperatures or pressures become extreme however, elastomeric seal properties degrade or exhibit excessive fluid/refrigerant emission. One such application, for example, is an air conditioning (A/C) system utilizing CO2 as the refrigerant. The CO2 A/C system typically has refrigerant temperatures exceeding 300 degrees F and pressures exceeding 2000 PSIG.
These conditions exceed the capabilities of elastomeric seals.

Currently, applications involving high temperature or pressure sometimes use a flared pipe style fitting or ferrule type fitting to provide a metal-to-metal seal. Both of these designs typically involve the plastic deformation of the pipe seal surface resulting in a one-time-use connection.

Examples of pipe fittings include U.S. Pat. 5,332,267 to Harrison, U.S. Pat. 5,362,229 to Yamaga, U.S. Pat. No. 4,928,998 to Brandener, and U.S. Pat. 4,343,499 to Dumar, Jr. et al.

Brandener, Harrison and Dumar all disclose a coupling assembly for connecting two pipes in which the second pipe forms the coupling having a spherical outer surface. This adds costs due to the requirement of manufacturing two different pipe ends.

The Harrison patent teaches a pipe coupling assembly for connecting a first pipe having a socket to a second pipe. The end of the second pipe is spherical and has a flow passage with a diameter slightly less than the diameter of the pipe to accommodate misaligning. The second pipe forms the coupling and is inserted into the first pipe and a clamping mechanism is disposed over the pipes. A ferrule is disposed between the first pipe and the clamping mechanism forming two contact areas in order to deform the socket of the first pipe to contact the surface of the second pipe. Initial contact of the flared surface of the first pipe and the spherical surface of the second pipe is along a line of contact, as distinguished from surface contact. However, the clamping mechanism compresses on the first pipe forcing the flared surface of the first pipe to conform about the line of contact and into the spherical surface of the second pipe to increase the contact from the line to a sealing land of definitive width, i.e., a band of contact.

The Yamaga patent discloses a pipe coupling assembly including a first pipe having a socket and a second pipe having a spherical-shaped end and a flow passage. The second pipe forms the coupling and is inserted into the socket of the first pipe and secured using a clamping mechanism. An o-ring in conjunction with a groove on the socket of the first pipe forms a seal between the first pipe and the second pipe.

Although the prior art provides a coupling assembly having sealing capabilities, there remains a need for a coupling assembly able to align itself with a pipe. More specifically, there is a need for an assembly is able to be aligned with two identical pipes, thus requiring a minimum number of components, while simultaneously providing unrestricted flow through the assembly.

### SUMMARY OF THE INVENTION

The invention provides for a first pipe and a second pipe each having an end extending radially outwardly into a hemispherical socket. An insert having a bulbous shape engages the sockets of the pipes and defines a flow passage extending along an axis between the pipes. A clamping mechanism is disposed about the pipes for holding the sockets into engagement with the insert. The insert has a first neck extending axially around the flow passage and fitting into the first pipe and a second neck extending axially around the flow passage and fitting into the second pipe for substantially aligning the pipes with the axis.

The present invention overcomes the shortcomings of relying on elastomeric seals and also allows re-use by creating a unique metal-to-metal seal geometry staying within the metal's elastic limits. Furthermore, the invention does not require threaded parts or o-rings. Also, because the ends of each pipe can be identical, it reduces manufacturing costs by allowing for the use of identical pipe ends as well as a minimum number of components. Moreover, the invention self aligns the insert with the two pipes while allowing for small movement between the two pipes within the elastic limit of the insert material. Additionally, the assembly provides unrestricted flow therethrough by providing a substantially uniform diameter, and thus cross-sectional area, between the pipes and the insert.

### BRIEF DESCRIPTION OF THE DRAWINGS

Other advantages of the present invention will be readily appreciated, as the same becomes better understood by reference to the following detailed description when considered in connection with the accompanying drawings wherein:

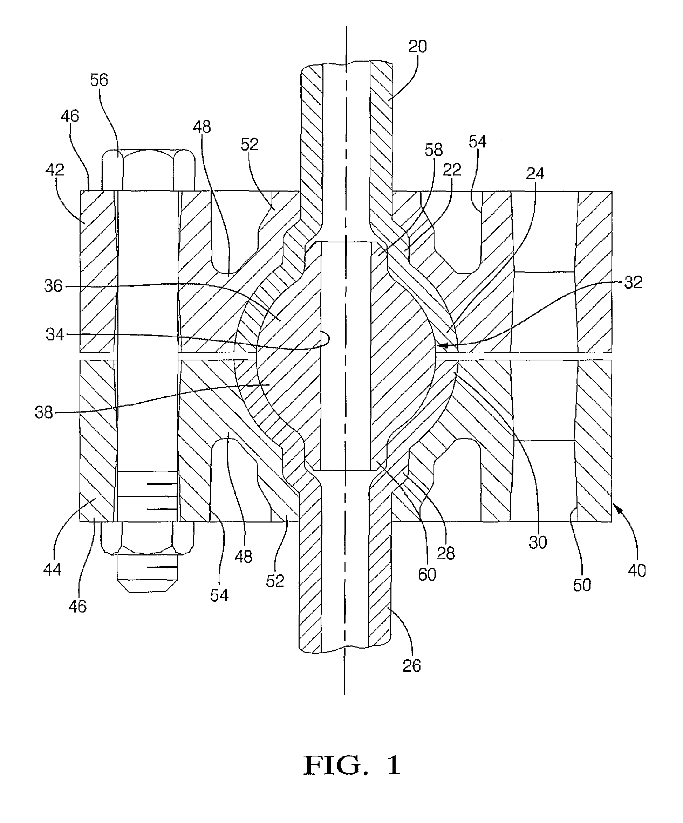

Figure 1 is a cross-sectional view of one embodiment of the invention illustrating the insert aligned in both pipes and one bolt in the clamping mechanism;

Figure 2 is an enlarged view of Figure 1 illustrating greater socket radii than insert radii exaggerated for illustrative purposes;

Figure 3 is a perspective view in cross-section of a second embodiment of the invention illustrating a slot in the insert; and

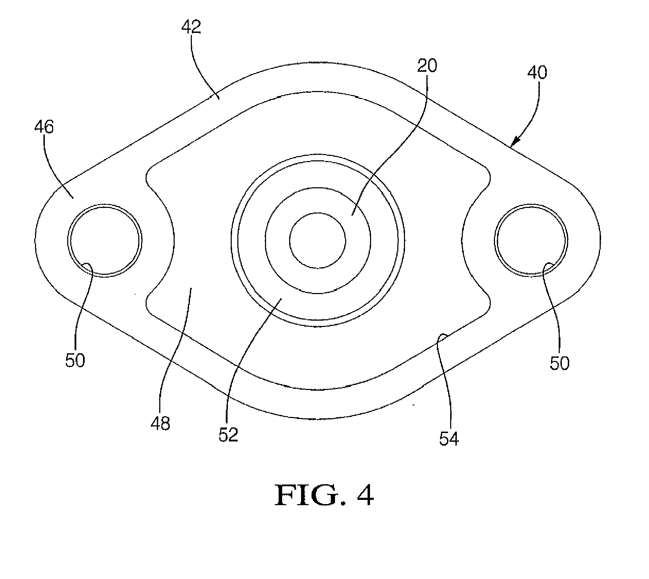

Figure 4 is a top view of the embodiment shown in Figure 2 illustrating the clamping mechanism.

### DESCRIPTION OF THE PREFERRED EMBODIMENT

Referring to the Figures, wherein like numerals indicate corresponding parts throughout the several views, a pipe coupling assembly is generally shown.

A first pipe **20** has an end which extends radially outwardly into an enlarged first collar **22** and then into a first hemispherical socket **24** having a first socket radius **R_{S1}** A second pipe **26** has an end which extends radially outwardly into an enlarged second collar **28** and then into a second hemispherical socket **30** having a second socket radius **R_{S2}.** In one embodiment, the first and second pipes **20, 26** are identical in shape and size to one another and the first and second sockets **24, 30** are identical in shape and size, i.e., the first socket radius **R_{S1}** is equal to the second socket radius **R_{S2}.** Similarly, the first and second collars **22, 28** are identical in shape and size to one another, thus requiring one tool to form the sockets **24, 30** on each pipe, lowering the cost of manufacturing the assembly.

The assembly includes an insert **32,** generally indicated, having a bulbous, or nearly spherical shape, e.g., an apple shape, for engaging the sockets **24, 30** of the pipes **20, 26.** The insert **32** is bulbous to accommodate some misalignment of the insert **32** relative to the pipes **20, 26** without changing the contact area or, more importantly, the sealing function.

The insert **32** defines a flow passage **34** extending along an axis **A** between the pipes **20, 26.** The insert **32** has a center diameter **d** about the axis **A** with a first hemisphere **36** having a first insert radius **R_{I1}** on one side of the diameter **d** and a second hemisphere **38** having a second insert radius **R_{I2}** on the other side of the diameter **d.** In one embodiment, the first insert radius **R_{I1}** is equal to the second insert radius **R_{I2}.**

The first socket radius **R_{S1}** is greater than the first insert radius **R_{I1}** and the second socket radius **R_{S2}** is greater than the second insert radius **R_{I2}** such that insertion of each of the hemispheres **36, 38** of the insert **32** into each of the respective sockets **24, 30** forms a circular contact line between each of the sockets **24, 30** and the insert **32,** e.g., a latitude line. The difference between each socket radius **R_{S1}, R_{S2}** and the corresponding insert radius **R_{I1}, R_{I2}** directly depends on the elastic limit of the materials used. If the materials of the insert **32** and the pipes **20, 26** have higher elastic limits the difference between the radii may be greater. Similarly, if the materials have lower elastic limits, the difference between the radii must be smaller to avoid plastic deformation.

A clamping mechanism **40,** generally indicated, is disposed about the pipes **20, 26** for holding the sockets **24, 30** into engagement with the insert **32.** The clamping mechanism **40** includes a first block **42** disposed about the first pipe **20** and a second block **44** disposed about the second pipe **26.** Each of the blocks **42, 44** includes a clamping ring **46** extending circumferentially about the clamping portion **48** and defining a plurality of holes **50** extending axially.

Each of the blocks **42, 44** of the clamping mechanism **40** includes a throat portion **52** having a diameter smaller than the collars **22, 28** and axially engaging one of the collars **22, 28** and a spherical clamping portion **48** extending from the throat portion **52** and about one of the sockets **24, 30.** The throat portion **52** and the spherical clamping portion **48** of each block profile each of the pipes **20, 26** leaving a small space between the throat portion **52** of the blocks **42, 44** and the collars **22, 28** of the pipes **20, 26** in order to evenly transfer the load from the clamping mechanism **40** to the perimeter of the sockets **24, 30** of the pipes **20, 26.** Each of the blocks **42, 44** defines an annular recess **54** extending axially thereinto between the clamping portion **48** and the clamping ring **46** for allowing a small amount of movement of the clamping ring **46** relative to the throat portion **52.**

The clamping mechanism **40** includes a plurality of bolts **56** disposed in the holes **50** in the clamping ring **46** of the blocks **42, 44** for clamping the first block **42** to the second block **44.** The bolts **56** move the sockets **24, 30** into engagement with the insert **32** along the line contact between each of the hemispheres **36, 38** and each of the sockets **24, 30** as the blocks **42, 44** are moved together. In theory, the geometry of the contact area remains a line while the blocks **42, 44** move together, however, in practice, the surface of the insert **32** is matched closely to that of the pipe so that it produces a contact band, with the highest load at the center, due to elastic deformation of the pipe and the insert **32** adjacent to this line of contact.

A layer of polymeric material may be disposed on the hemispheres **36, 38** of the insert **32** for forming a seal between the insert **32** and the sockets **24, 30** by filling surface imperfections in the insert **32** and the sockets **24, 30.** The polymeric material may be coated on the surface of the insert **32** or the insert **32** may be impregnated with the polymeric material.

The assembly is distinguished by the insert **32** having a first neck **58** extending axially around the flow passage **34** and terminating in a chamfered end and a second neck **60** extending axially around the flow passage **34** and terminating in a chamfered end. The first neck **58** fits with loose clearance into the first collar **22** of the first pipe **20** and the second neck **60** fits with loose clearance into the second collar **28** of the second pipe **26** to substantially align the pipes **20, 26** with the axis **A.** A small space is provided between the chamfered ends of the necks **58, 60** and each of the collars **22, 28.**

Although the first and second necks **58, 60** may be inserted into the first and second pipes **20, 26** respectively, the necks **58, 60** are preferably inserted into the first and second collars **22, 28** so that the inside diameters of the pipes **20, 26** are substantially equal to the diameter of the flow passage **34,** thus creating unrestricted flow through the assembly.

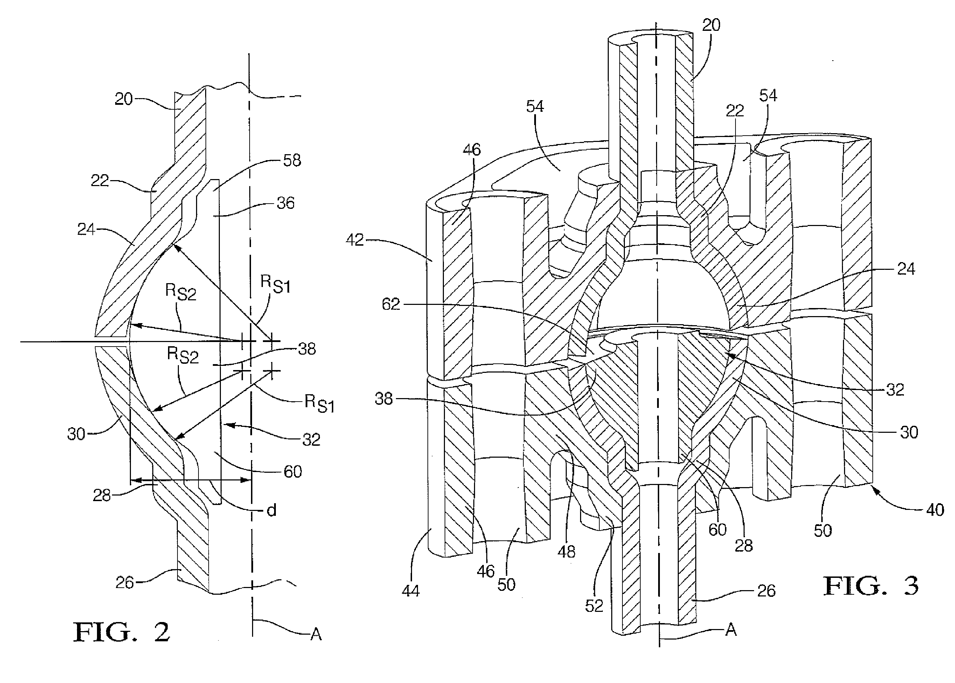

As shown in Fig. 3, the insert **32** defines a slot **62** extending radially and circumferentially about the axis **A** on the diameter **d** of the insert **32** for allowing movement of the first hemisphere **36** relative to the second hemisphere **38.** The slot **62** is U-shaped and provides increased compliance allowing more deflection between the two hemispheres **36, 38** within elastic limits and increases the assembly's tolerance of thermal expansion and vibration inputs. The slot **62** may also allow small movement between the first pipe **20** and the second pipe **26** without causing sliding between the insert **32** and the sockets **24, 30,** reducing wear or galling and subsequent leakage.

While the invention has been described with reference to an exemplary embodiment, it will be understood by those skilled in the art that various changes may be made and equivalents may be substituted for elements thereof without departing from the scope of the invention. In addition, many modifications may be made to adapt a particular situation or material to the teachings of the invention without departing from the essential scope thereof. Therefore, it is intended that the invention not be limited to the particular embodiment disclosed as the best mode contemplated for carrying out this invention, but that the invention will include all embodiments falling within the scope of the appended claims.

## Claims

1. A pipe coupling assembly comprising;
a first pipe **(20)** having an end extending radially outwardly into a first hemispherical socket **(24)** having a first socket radius **(R_{S1}),**
a second pipe **(26)** having an end extending radially outwardly into a second hemispherical socket **(30)** having a second socket radius (**R_{S2}**),
an insert **(32)** having a bulbous shape for engaging said sockets **(24, 30)** of said pipes **(20, 26)** and defining a flow passage **(34)** extending along an axis **(A)** between said pipes **(20, 26)** and having a center diameter **(d)** about said axis **(A)** with a first hemisphere **(36)** having a first insert radius (**R_{I1}**) on one side of said diameter **(d)** and a second hemisphere **(38)** having a second insert radius **(R_{I2})** on the other side of said diameter **(d),**
a clamping mechanism **(40)** disposed about said pipes **(20, 26)** for holding said sockets **(24, 30)** into engagement with said insert **(32),** and
said insert **(32)** having a first neck **(58)** extending axially around said flow passage **(34)** and fitting into said first pipe **(20)** and a second neck **(60)** extending axially around said flow passage **(34)** and fitting into said second pipe **(26)** for substantially aligning said pipes **(20, 26)** with said axis **(A).**

2. An assembly as set forth in claim 1 wherein said first socket radius **(R_{S1})** is greater than said first insert radius **(R_{I1})** and said second socket radius **(R_{S2})** is greater than said second insert radius **(R_{I2})** whereby insertion of said insert **(32)** into said sockets **(24, 30)** forms a circular contact line between said each of said hemispheres **(36, 38)** of said insert **(32)** and each of said sockets **(24, 30).**

3. An assembly as set forth in claim 1 wherein said first socket radius **(R_{S1})** is equal to said second socket radius **(R_{S2})** and said first insert radius **(R_{I1})** is equal to said second insert radius **(R_{I2}),**
whereby said first hemispherical socket **(24)** is equal in size and shape to said second hemispherical socket **(30)** and said first hemisphere **(36)** of said insert **(32)** is equal in size and shape to said second hemisphere **(38)** of said insert **(32).**

4. An assembly as set forth in claim 1 wherein said first pipe **(20)** extends into an enlarged first collar **(22)** and then into said first socket **(24)** and said second pipe **(26)** extends into an enlarged second collar **(28)** and then into said second socket **(30),** and wherein said first neck **(58)** fits into said first collar **(22)** and said second neck **(60)** fits into said second collar **(28).**

5. An assembly as set forth in claim 4 wherein said first collar **(22)** is identical in shape and size to said second collar **(28)** and wherein said first hemispherical socket **(24)** is equal in size and shape to said second hemispherical socket **(30)** and said first hemisphere **(36)** of said insert **(32)** is equal in size and shape to said second hemisphere **(38)** of said insert **(32).**

6. An assembly as set forth in claim 4 wherein said first neck **(58)** and said second neck **(60)** each terminate in a chamfered end.

7. An assembly as set forth in claim 4 wherein said clamping mechanism **(40)** includes a first block **(42)** disposed about said first pipe **(20)** and a second block **(44)** disposed about said second pipe **(26).**

8. An assembly as set forth in claim 7 wherein each of said blocks **(42, 44)** includes a throat portion **(52)** having a diameter **(d)** smaller than said collars **(22, 28)** and axially engaging one of said collars **(22, 28)** and a spherical clamping portion **(48)** extending from said throat and about one of said sockets **(24, 30).**

9. An assembly as set forth in claim 8 wherein each of said blocks **(42, 44)** includes a clamping ring **(46)** extending circumferentially about said clamping portion **(48)** and defining a plurality of holes **(50)** extending axially.

10. An assembly as set forth in claim 9 wherein each of said blocks **(42, 44)** defines an annular recess **(54)** extending axially thereinto between said clamping portion **(48)** and said clamping ring **(46).**

11. An assembly as set forth in claim 10 wherein said first socket radius **(R_{S1})** is greater than said first insert radius **(R_{I1})** and said second socket radius **(R_{S2})** is greater than said second insert radius **(R_{I2})** whereby insertion of said insert **(32)** into said sockets **(24, 30)** forms a circular contact line between said each of said hemispheres **(36, 38)** of said insert **(32)** and each of said sockets **(24, 30).**

12. An assembly as set forth in claim 11 wherein said clamping mechanism **(40)** includes a plurality of bolts **(56)** disposed in said holes **(50)** in said clamping ring **(46)** of said blocks **(42, 44)** for clamping said first block **(42)** to said second block **(44)** to move said sockets **(24, 30)** into engagement with said insert **(32)** along line contact between each of said hemispheres **(36, 38)** and each of said sockets **(24, 30)** as said blocks **(42, 44)** are moved together.

13. An assembly as set forth in claim 1 wherein said insert **(32)** defines a slot **(62)** extending radially and circumferentially about said axis **(A)** for allowing movement of said first hemisphere **(36)** relative to said second hemisphere **(38).**

14. An assembly as set forth in claim 13 wherein said slot **(62)** of said insert **(32)** extends on said diameter **(d)** of said insert **(32).**

15. An assembly as set forth in claim 1 including a layer of polymeric material disposed on said hemispheres **(36, 38)** of said insert **(32)** for forming a seal between said insert **(32)** and said sockets **(24, 30)** by filling surface imperfections in said insert **(32)** and said sockets **(24, 30).**

16. A pipe coupling assembly comprising;
a first pipe **(20)** having an end extending radially outwardly into a first hemispherical socket **(24),**
a second pipe **(26)** having an end extending radially outwardly into a second hemispherical socket **(30)** identical in shape and size to respective ones of said first pipe **(20)** and said first socket **(24),**
an insert **(32)** having a bulbous shape for engaging said sockets **(24, 30)** of said pipes **(20, 26)** and defining a flow passage **(34)** extending along an axis **(A)** between said pipes **(20, 26)** and having a center diameter **(d)** about said axis **(A)** with a first hemisphere **(36)** on one side of said diameter **(d)** and a second hemisphere **(38)** on the other side of said diameter **(d),**
a clamping mechanism **(40)** disposed about said pipes **(20, 26)** for holding said sockets **(24, 30)** into engagement with said insert **(32),** and said insert **(32)** defining a slot **(62)** extending radially and circumferentially about said axis **(A)** for allowing movement of said first hemisphere **(36)** relative to said second hemisphere **(38).**

17. A pipe coupling assembly comprising;
a first pipe **(20)** having an end extending into an enlarged first collar **(22)** and then into a first hemispherical socket **(24)** having a first socket radius **(R_{S1}),**
a second pipe **(26)** having an end extending into an enlarged second collar **(28)** and then into a second hemispherical socket **(30)** having a second socket radius **(R_{S2}),**
said second pipe, second collar, and second socket being identical in shape and size to respective ones of said first pipe **(20)** and said first collar **(22)** and said first socket **(24),**
an insert **(32)** having a bulbous shape for engaging said sockets **(24, 30)** of said pipes **(20, 26)** and defining a flow passage **(34)** extending along an axis **(A)** and having a center diameter **(d)** about said axis **(A)** with a first hemisphere **(36)** having a first insert radius (R_{I1}) on one side of said diameter **(d)** and a second hemisphere **(38)** having a second insert radius **(R_{I2})** on the other side of said diameter **(d),**
said first socket radius **(R_{S1})** being greater than said first insert radius **(R_{I1})** and said second socket radius **(R_{S2})** being greater than said second insert radius **(R_{I2}),**
a clamping mechanism **(40)** including a first block **(42)** disposed about said first pipe **(20)** and a second block **(44)** disposed about said second pipe **(26)** for holding said sockets **(24, 30)** into engagement with said insert **(32),**
each of said blocks **(42, 44)** including a clamping ring **(46)** extending circumferentially about said clamping portion **(48)** and defining a plurality of holes **(50)** extending axially,
said clamping device including a plurality of bolts **(56)** disposed in said holes **(50)** in said clamping ring **(46)** of said blocks **(42, 44)** for clamping said first block **(42)** to said second block **(44)** to move said sockets **(24, 30)** into engagement with said insert **(32)** along line contact between each of said hemispheres **(36, 38)** and each of said sockets **(24, 30)** as said blocks **(42, 44)** are moved together,
a layer of polymeric material disposed on said hemispheres **(36, 38)** of said insert **(32)** for forming a seal between said insert **(32)** and said sockets **(24, 30)** by filling surface imperfections in said insert **(32)** and said sockets **(24, 30),**
said insert **(32)** having a first neck **(58)** extending axially around said flow passage **(34)** and into said first collar **(22)** of said first pipe **(20)** and terminating in a chamfered end and a second neck **(60)** extending axially around said flow passage **(34)** and into said second collar **(28)** of said second pipe **(26)** and terminating in a chamfered end,
each of said blocks **(42, 44)** including a throat portion **(52)** having a diameter **(d)** smaller than said collars **(22, 28)** and axially engaging one of said collars **(22, 28)** and a spherical clamping portion **(48)** extending from said throat and about one of said sockets **(24, 30),** and
each of said blocks **(42, 44)** defining an annular recess **(54)** extending axially thereinto between said clamping portion **(48)** and said clamping ring **(46).**

18. An assembly as set forth in claim 17 wherein said insert **(32)** defines a slot **(62)** extending radially and circumferentially about said axis **(A)** on said diameter **(d)** of said insert **(32)** for allowing movement of said first hemisphere **(36)** relative to said second hemisphere **(38).**
